# EUROPEAN PATENT APPLICATION

(11) **EP 2 755 145 A1**
(43) Date of publication of application: **16.07.2014**
(21) Application number: 12830798.0
(22) Date of filing: 06.09.2012
(51) Int. Cl.: G06F 17/30

(54) **WEBPAGE BROWSING METHOD AND DEVICE, AND STORAGE MEDIUM**

(30) Priority: 07.09.2011 CN 201110264067
(71) Applicant: Tencent Technology (Shenzhen) Co., Ltd, Futian, Guangdong 518057 (CN)
(72) Inventor: LEI, Bin, Guangdong 518057 (CN); ZHANG, Bo, Guangdong 518057 (CN); SHEN, Jinlong, Guangdong 518057 (CN); LI, Xuefeng, Guangdong 518057 (CN)
(74) Representative: Gunzelmann, Rainer
(86) International application number: PCT/CN2012/081082
(87) International publication number: WO 2013/034094

(57) **Abstract**

The embodiments of the present invention discloses a method and apparatus for browsing a webpage, and also provide a storage medium, so as to make a user browse a webpage continuously when the user surfs on the Internet by a browser of a mobile terminal. In the embodiments of the present invention, the webpage contents are saved into the non-transitory storage of the mobile terminal by an object serialization mode for the user. When the user opens the browser again, the webpage contents are automatically loaded for the user. By the solution of the present invention, the browser can memorize the browsing state of the user, and can automatically restore the last browsing state of the user when the user starts the browser again. In this way, repeated input operations of the user can be reduced, and the user can browse the last browsed webpage continuously when the user surfs on the Internet by the browser of the mobile terminal, thereby saving the time of the user, reducing network traffic consumption and improving user experiences.

## Description

### Technical Field

The present invention relates to Internet technologies, and more particularly to a method and apparatus for browsing webpages, and a storage medium.

### Background

Using a mobile terminal such as a mobile telephone and a tablet computer, a user may surf on the Internet anytime and anywhere. However, the user usually surfs on the Internet by the mobile terminal in piecemeal time. For example, the user often surfs on the Internet on a bus or in a queue. Accordingly, the user surfs on the Internet frequently, but surfing time is usually short. Moreover, contents that are browsed by the user many times may be continuous. That is, if the user starts a browser again after closing the current browser, the user may continue to browse the last browsed contents.

In order to browse the last browsed contents, the user usually searches for the last visited website within a history record on a browser of a mobile terminal, and opens a webpage of the website to continue the last browsed contents. The history record includes websites that have been visited by the user and automatically recorded by the browser. The history record is presented with a list. In the list, the websites are arranged in a reverse chronological order. That is, a website at the top of the list is the last visited website.

Similar to the history record, some browsers provide a record including frequently visited websites. In this technology, an application automatically collects websites visited by the user, and arranges the websites in a list according to a visiting frequency of the user. That is, a website at the top of the list has the highest visiting frequency. The user may also find the last visited website by searching the list.

If the user manually opens a webpage of the last visited website in the history record, there are at least three problems.

Firstly, repeated submission may be inevitable. When the user visits the last visited website again, a request is sent to a server again, and then the server returns data of the website to a mobile terminal of the user. If the request includes to-be-summited data, the to-be-summited data is submitted repeatedly. For example, the user opens a posting page. If the user has posted last time, the user may repeatedly post when opening the posting page again. If the user opens a transfer page again, the user may lose money.

Secondly, after the last browsed webpage is closed, the user needs to resend a request to open the webpage, and thus the contents of the opened webpage may be different from the contents of the last browsed webpage. For example, the contents of a news website may be updated in time, and thus the last browsed contents may be changed when the news website is opened again. As to some webpages with logging states, when the user opens the last browsed webpage again, the logging state may be invalid, and thus what the user opens is a logging page instead of the last browsed webpage.

Finally, if the user intends to open the last browsed webpage, the user needs to initiatively send a request, which results in complex operations, network traffic consumption and network delay.

### Summary

Embodiments of the present invention provide a method and apparatus for browsing webpages, and also provide a storage medium, so as to make a user browse a webpage continuously when the user surfs on the Internet by a browser of a mobile terminal.

The solution of the present invention is implemented as follows.

A method for browsing webpages includes:
when a browser of a mobile terminal is closed, saving webpage contents in a memory of the mobile terminal into non-transitory storage of the mobile terminal; and
when the browser is started or run again, reading the webpage contents that have been saved in the non-transitory storage of the mobile terminal when the browser is closed last time, and loading and displaying the webpage contents for a user.

An apparatus for browsing webpages includes
a saving module, configured to, when a browser of a mobile terminal is closed, save webpage contents in a memory of the mobile terminal into non-transitory storage of the mobile terminal; and
a restoring module, configured to, when the browser is started or run again, read the webpage contents that have been saved in the non-transitory storage of the mobile terminal when the browser is closed last time, and load and display the webpage contents for a user.

One or more storage mediums comprising computer executable instructions that are configured to execute a method of browsing a webpage, wherein the method comprises:
when a browser of a mobile terminal is closed, saving webpage contents in a memory of the mobile terminal into non-transitory storage of the mobile terminal; and
when the browser is started or run again, reading the webpage contents that have been saved in the non-transitory storage of the mobile terminal when the browser is closed last time, and loading and displaying the webpage contents for a user.

As can be seen from the solution of the present invention, the browser can memorize the browsing state of the user, and can automatically restore the last browsing state of the user when the user starts the browser again. In this way, repeated input operations of the user can be reduced, and the user can browse the last browsed webpage continuously when the user surfs on the Internet by the browser of the mobile terminal, thereby saving the time of the user, reducing network traffic consumption and improving user experiences.

### Brief Description of the Drawings

Figure 1 is a schematic diagram illustrating a method for browsing webpages continuously according to an embodiment of the present invention.
Figure 2 is a schematic diagram illustrating a method for browsing webpages continuously through an object serialization mode according to an embodiment of the present invention.
Figure 3 is a schematic diagram illustrating a process of closing a browser according to an embodiment of the present invention.
Figure 4 is a schematic diagram illustrating a process performed by a browser when the browser is started or run again according to an embodiment of the present invention.
Figure 5 is a schematic diagram illustrating the structure of an apparatus for browsing webpages continuously according to an embodiment of the present invention.

### Detailed Description

In order to make the solution and merits of the present invention clearer, the present invention will be illustrated hereinafter with reference to the accompanying drawings and specific embodiments.

A user usually surfs on the Internet by a browser of a smart mobile terminal in piecemeal time. If the contents of previously browsed webpage cannot be continued unless a series of operations are performed, a user who often closes and opens the webpage feels inconvenient. The solution provided by embodiments of the present invention is implemented as follows. When a user closes the browser of a mobile terminal, the browser saves contents of a webpage currently visited by the user into local non-transitory storage of the mobile terminal. When the user starts the browser again, the browser automatically load the contents of the webpage saved in the local non-transitory storage, and thus the browser restores the last browsing state of the user. In this way, repeated input operations of the user can be reduced, and the user can browse the last browsed webpage continuously, thereby saving the time of the user, reducing data traffic consumption and improving user experiences.

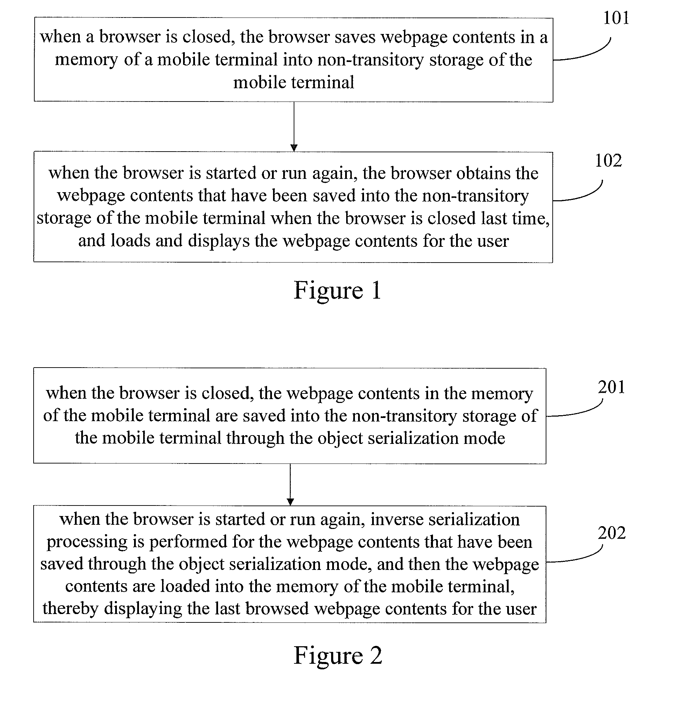

Figure 1 is a schematic diagram illustrating a method for browsing webpages continuously according to an embodiment of the present invention. The method includes following blocks.

At block 101, when a browser is closed, the browser saves webpage contents in a memory of a mobile terminal into non-transitory storage of the mobile terminal.

The mobile terminal usually includes transitory storage and non-transitory storage. The transitory storage, such as the memory of a mobile telephone, is used for loading and running an application and temporarily saving data generated when the application is run. The non-transitory storage (also called permanent storage), such as storage or a storage card of the mobile telephone, is used for permanently saving programs, data and files that need to be saved forever.

The webpage contents include a webpage object, resources corresponding to the webpage object, a webpage state and a timing relationship of webpages.

At block 102, when the browser is started or run again, the browser obtains the webpage contents that have been saved into the non-transitory storage of the mobile terminal when the browser is closed last time, and loads and displays the webpage contents for the user.

In this embodiment, methods for saving the webpage contents into the non-transitory storage and reading the webpage contents from the non-transitory storage are not limited. The webpage contents may be saved through a file package mode, an object serialization mode, or a screenshot mode.

Through the file package mode, the webpage contents may be saved into the non-transitory storage in the form of file. For example, the webpage object, the resources corresponding to the webpage object, the webpage state and the timing relationship of webpages may be written into a file. When the browser is started or run again, the browser reads the file and loads the webpage contents that have been written into the file into the memory of the mobile terminal, thereby displaying the last browsed webpage contents for the user. The file package mode is a permanent storage mode.

Through the screenshot mode, the webpage contents may be saved into the non-transitory storage in the form of screenshot. When the browser is started or run again, the browser reads the saved screenshot, converts the screenshot into the webpage contents and loads the webpage contents into the memory of the mobile terminal, thereby displaying the last browsed webpage contents for the user.

Taking the object serialization mode for instance, the method provided by the embodiment of the present invention is described hereinafter.

Figure 2 is a schematic diagram illustrating a method for browsing webpages continuously through an object serialization mode according to an embodiment of the present invention. The method includes following blocks.

At block 201, when the browser is closed, the webpage contents in the memory of the mobile terminal are saved into the non-transitory storage of the mobile terminal through the object serialization mode.

When the user opens a webpage on a browser developed by an object-oriented software developing technology, the browser creates a webpage object in the memory, and loads the webpage contents through the webpage object. An object-oriented developing tool also provides a serialization interface and an inverse serialization interface of a memory object. In this embodiment, an object serialization storage technology is adopted. In the technology, the webpage contents are converted into a binary data stream through the object serialization mode, and then the binary data stream is compressed and saved. In this embodiment, all variables of the webpage contents may be saved through the object serialization mode. That is, the webpage contents in the memory may be converted into bytes. In this embodiment, object serialization processing is performed for a dom tree corresponding to the webpage contents, and thus the webpage contents are converted into bytes. Through the dom tree, the webpage contents are presented as a tree structure (called node tree) having elements, attributes and texts.

When the webpage contents are to be loaded again, an inverse serialization processing is performed for the webpage contents that have been saved through the object serialization mode to restore the webpage contents. That is, the bytes are converted into the webpage contents, and then the webpage contents are loaded into the memory of the mobile terminal. The webpage contents described in the embodiments of the present invention include a webpage object, resources corresponding to the webpage object, a webpage state and a timing relationship of webpages. The above webpage contents may be saved through the object serialization mode. That is, the webpage object, the resources corresponding to the webpage object, the webpage state and the timing relationship of webpages are taken as coordinate objects and are saved through the object serialization mode.

The resources corresponding to the webpage object include a picture, Flash and an audio-visual file that are downloaded with the webpage. The webpage state includes information related to a focus and an origin. The timing relationship of webpages refers to a sequence of visiting the webpages by the user, and is used for implementing a forward and backward function of the webpages after the webpage contents is loaded again.

The focus refers to a location on the webpage, at which input of the user may be accepted. For example, if the user selects a link, the link is identified with a color to indicate that the link obtains a focus. The origin refers to a location in the webpage, at which the start point of the webpage contents currently displayed on the browser is located. For example, when the height of the webpage is higher than the height of screen of the mobile terminal, the origin is a location in the webpage, at which the upper left corner of the screen is located.

At block 202, when the browser is started or run again, inverse serialization processing is performed for the webpage contents that have been saved through the object serialization mode, and then the webpage contents are loaded into the memory of the mobile terminal, thereby displaying the last browsed webpage contents for the user.

In another embodiment of the present invention, by adding a new attribute into the webpage object or creating a separate object in the webpage object, the resources corresponding to the webpage object, the webpage state and the timing relationship of webpages are saved through the object serialization mode. For example, the resources corresponding to the webpage object, the webpage state and the timing relationship of webpages may be taken as an attribute or object of the webpage object. That is, a new attribute is added into the webpage object or a separate object is created in the webpage object. In an example, the new attribute may be an attribute tag, and the separate object may be created with program language. The new attribute or the separate object corresponds to the resources corresponding to the webpage object, the webpage state and the timing relationship of webpages. When the webpage contents are saved through the object serialization mode, the webpage object is saved through the object serialization mode. Thus, the added new attribute or the created separate object is saved as the internal information of the webpage object through the object serialization mode.

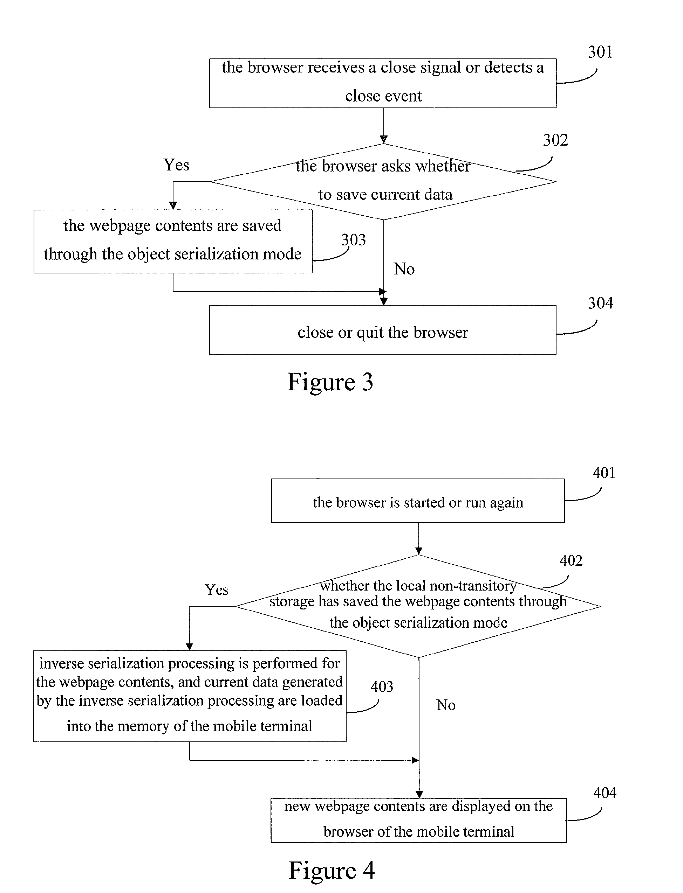

Figure 3 is a schematic diagram illustrating a process of closing a browser according to an embodiment of the present invention. The process includes following blocks.

At block 301, the browser receives a close signal or detects a close event.

At block 302, before calling a close function or a memory release function, the browser asks whether to save current data. That is, the browser asks the user whether to browse the webpage continuously after the browser is started again. If the user intends to browse the webpage continuously, block 303 is performed. Otherwise, block 304 is performed.

The current data includes the webpage object, the resources corresponding to the webpage object, the webpage state and the timing relationship of webpages. That is, the current data includes the forementioned webpage contents.

At block 303, the webpage contents are permanently saved. For example, the webpage contents may be saved through the object serialization mode.

At block 304, the close function or the memory release function is called to close or quit the browser.

Figure 4 is a schematic diagram illustrating a process performed by a browser when the browser is started or run again according to an embodiment of the present invention. The process includes following blocks.

At block 401, the browser is started or run again.

At block 402, after being initialized, the browser determines whether the local non-transitory storage has saved webpage contents through the object serialization mode. If the local non-transitory storage has saved the webpage contents through the object serialization mode, block 403 is performed. Otherwise, block 404 is performed.

At block 403, the webpage contents that have been saved in the non-transitory storage through the object serialization mode are read, inverse serialization processing is performed for the webpage contents, and current data generated by the inverse serialization processing are loaded into the memory of the mobile terminal.

At block 404, new webpage contents are displayed on the browser of the mobile terminal.

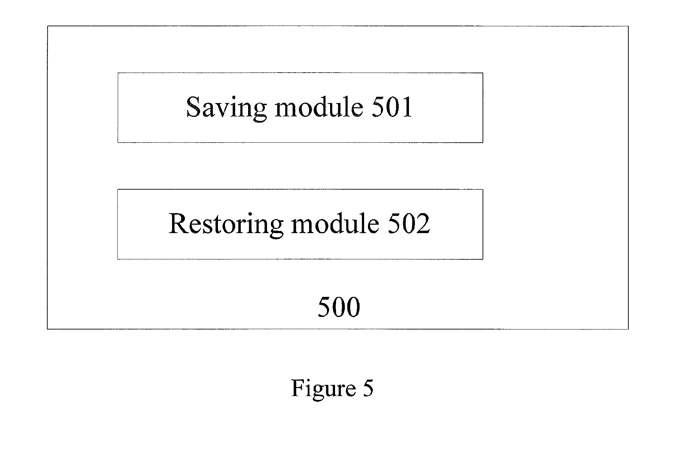

Figure 5 is a schematic diagram illustrating the structure of an apparatus for browsing webpages continuously according to an embodiment of the present invention. The apparatus 500 may be applied to a browser of a mobile terminal, or may be implemented through a separate application. The apparatus 500 includes following modules.

A saving module 501 is configured to, when the browser is closed, save webpage contents in a memory of the mobile terminal into non-transitory storage of the mobile terminal.

A restoring module 502 is configured to, when the browser is started or run again, read the webpage contents that have been saved in the non-transitory storage of the mobile terminal when the browser is closed last time, and load and display the webpage contents for a user.

In an example, the saving module 501 is configured to save the webpage contents in the memory of the mobile terminal into the non-transitory storage of the mobile terminal through an object serialization mode. The restoring module 502 is configured to read the webpage contents that have been saved in the non-transitory storage of the mobile terminal through the object serialization mode, perform inverse serialization processing for the webpage contents, and then load the webpage contents into the memory of the mobile terminal.

In an example, the saving module 501 is configured to save the webpage contents in the memory of the mobile terminal into the non-transitory storage of the mobile terminal through a file package mode. The restoring module 502 is configured to read a file from the non-transitory storage of the mobile terminal and loads the webpage contents that have been written into the file into the memory of the mobile terminal.

In an example, the restoring module 502 is further configured to determine whether the non-transitory storage of the mobile terminal has saved the webpage contents through the object serialization mode. If the non-transitory storage of the mobile terminal has saved the webpage contents through the object serialization mode, the restoring module 502 is configured to read the webpage contents that have been saved in the non-transitory storage of the mobile terminal through the object serialization mode when the browser is closed last time. If the local non-transitory storage of the mobile terminal has not saved the webpage contents through the object serialization mode, the restoring module 502 is configured to display new webpage contents on the browser of the mobile terminal.

The webpage contents include a webpage object, resources corresponding to the webpage object, a webpage state and a timing relationship of webpages. The resources corresponding to the webpage object include a picture, Flash and an audio-visual file that are downloaded with the webpage. The webpage state includes information related to a focus and an origin. The timing relationship of webpages refers to a sequence of visiting the webpages by the user.

Since the above apparatus is implemented based on the forementioned method, the modules in the apparatus are configured to implement the processes of the method. Thus, the functions of the modules may be deduced directly from the processes of the method. Any module or unit that can be extracted or deduced from the processes of the method belongs to the protection scope of the present invention, which is not illustrated in detail herein.

Those skilled in the art should understand that, the embodiments of the present invention may be methods, systems or computer program products, and thus the embodiments of the present invention may be realized by hardware, by software, or by software accompanied by hardware. Moreover, the embodiments of the present invention may be computer program products that are executed on one or more computer readable storage mediums including computer readable program codes. The computer readable storage mediums include, but are not limited to, disk storage and optical storage.

The solution of the present invention is illustrated with reference to the schematic flowcharts and/or schematic diagrams of the method, apparatus (system) and computer program products provided by the embodiments of the present invention. It should be noted that, each process of the schematic flowcharts and/or each block of the schematic diagrams, and the combination of the process of the schematic flowcharts and/or the block of the schematic diagrams may be realized by computer program instructions. The computer program instructions may be provided to a general computer, a dedicated computer, an embedded processor or a processor of programmable data processing device. In this way, the instructions executed by the computer or the processor of programmable data processing device may generate an apparatus for implementing the functions of one or more processes in the schematic flowcharts and/or the functions of one or more blocks in the schematic diagrams.

The computer program instructions may be saved in computer readable storage that can conduct the computer or the programmable data processing device to work in a given mode. In this way, the instructions in the computer readable storage may generate a product including an instruction apparatus. The instruction apparatus may implement the functions of one or more processes in the schematic flowcharts and/or the functions of one or more blocks in the schematic diagrams.

The computer program instructions may be loaded into the computer or the programmable data processing device. In this way, a serial of operations may be performed on the computer or the programmable data processing device to generate processing implemented by the computer. Thus, the instructions executed on the computer or the programmable data processing device may provide processes for implementing the functions of one or more processes in the schematic flowcharts and/or the functions of one or more blocks in the schematic diagrams.

The foregoing is some embodiments of the present invention and is not used to limit the protection scope of the present invention.

## Claims

1. A method for browsing webpages, comprising:
when a browser of a mobile terminal is closed, saving webpage contents in a memory of the mobile terminal into non-transitory storage of the mobile terminal; and
when the browser is started or run again, reading the webpage contents that have been saved in the non-transitory storage of the mobile terminal when the browser is closed last time, and loading and displaying the webpage contents for a user.

2. The method of claim 1, wherein
the saving the webpage contents comprises: saving the webpage contents in the memory of the mobile terminal into the non-transitory storage of the mobile terminal through an object serialization mode;
the reading and loading the webpage contents comprises: reading the webpage contents that have been saved in the non-transitory storage of the mobile terminal through the object serialization mode, performing inverse serialization processing for the webpage contents, and loading the webpage contents into the memory of the mobile terminal.

3. The method of claim 2, wherein the webpage contents comprise a webpage object, resources corresponding to the webpage object, a webpage state and a timing relationship of webpages.

4. The method of claim 3, wherein the resources corresponding to the webpage object comprise a picture, Flash and an audio-visual file that are downloaded with the webpage.

5. The method of claim 3, wherein the webpage state comprises information related to a focus and an origin, and the timing relationship of webpages is a sequence of visiting the webpages by the user.

6. The method of claim 3, wherein the saving the webpage contents in the memory of the mobile terminal into the non-transitory storage of the mobile terminal through the object serialization mode comprises: taking the webpage object, the resources corresponding to the webpage object, the webpage state and the timing relationship of webpages as coordinate objects, and saving the coordinate objects into the non-transitory storage of the mobile terminal through the object serialization mode.

7. The method of claim 3, wherein the saving the webpage contents in the memory of the mobile terminal into the non-transitory storage of the mobile terminal through the object serialization mode comprises: adding a new attribute into the webpage object or creating a separate object in the webpage object, and saving the webpage object through the object serialization mode, wherein the new attribute or the separate object corresponds to the resources corresponding to the webpage object, the webpage state and the timing relationship of webpages.

8. The method of claim 1, wherein
the saving the webpage contents comprises: saving the webpage contents in the memory of the mobile terminal into the non-transitory storage of the mobile terminal through a file package mode; and
the reading and loading the webpage contents comprises: reading a file from the non-transitory storage of the mobile terminal, and loading the webpage contents that have been written into the file into the memory of the mobile terminal.

9. The method of any of claims 1 to 8, before saving the webpage contents in the memory of the mobile terminal into the non-transitory storage of the mobile terminal, further comprising:
asking the user whether to browse the webpage contents continuously after the browser is started again;
reading input of the user; when determining according to the input of the user that the user intends to browse the webpage contents continuously, saving the webpage contents in the memory of the mobile terminal into the non-transitory storage of the mobile terminal; and
when determining according to the input of the user that the user does not intend to browse the webpage contents continuously, closing the browser.

10. An apparatus for browsing webpages, comprising:
a saving module, configured to, when a browser of a mobile terminal is closed, save webpage contents in a memory of the mobile terminal into non-transitory storage of the mobile terminal; and
a restoring module, configured to, when the browser is started or run again, read the webpage contents that have been saved in the non-transitory storage of the mobile terminal when the browser is closed last time, and load and display the webpage contents for a user.

11. The apparatus of claim 10, wherein the saving module is configured to save the webpage contents in the memory of the mobile terminal into the non-transitory storage of the mobile terminal through an object serialization mode; and
the restoring module is configured to read the webpage contents that have been saved in the non-transitory storage of the mobile terminal through the object serialization mode, perform inverse serialization processing for the webpage contents, and load the webpage contents into the memory of the mobile terminal.

12. The apparatus of claim 11, wherein the webpage contents comprise a webpage object, resources corresponding to the webpage object, a webpage state and a timing relationship of webpages.

13. The apparatus of claim 12, wherein the resources corresponding to the webpage object comprise a picture, Flash and an audio-visual file that are downloaded with the webpage.

14. The apparatus of claim 12, wherein the webpage state comprises information related to a focus and an origin, and the timing relationship of webpages is a sequence of visiting the webpages by the user.

15. The apparatus of claim 10, wherein the saving module is configured to save the webpage contents in the memory of the mobile terminal into the non-transitory storage of the mobile terminal through a file package mode; and
the restoring module is configured to read a file from the non-transitory storage of the mobile terminal and loads the webpage contents that have been written into the file into the memory of the mobile terminal.

16. The apparatus of any of claims 10 to 15, wherein the restoring module is further configured to determine whether the non-transitory storage of the mobile terminal has saved the webpage contents through the object serialization mode; if the non-transitory storage of the mobile terminal has the webpage contents through the object serialization mode, read the webpage contents that have been saved in the non-transitory storage of the mobile terminal when the browser is closed last time; if the non-transitory storage of the mobile terminal has not saved the webpage contents through the object serialization mode, display new webpage contents on the browser of the mobile terminal.

17. One or more storage mediums comprising computer executable instructions that are configured to execute a method of browsing a webpage, wherein the method comprises:
when a browser of a mobile terminal is closed, saving webpage contents in a memory of the mobile terminal into non-transitory storage of the mobile terminal; and
when the browser is started or run again, reading the webpage contents that have been saved in the non-transitory storage of the mobile terminal when the browser is closed last time, and loading and displaying the webpage contents for a user.
